(19) Europäisches Patentamt
European Patent Office
Office européen des brevets

(11) **EP 1 950 873 A1**

(12) **EUROPEAN PATENT APPLICATION**

(43) Date of publication:
**30.07.2008 Bulletin 2008/31**

(51) Int Cl.:
*H02M 3/07* (2006.01)    *H02J 7/35* (2006.01)
*H01L 31/042* (2006.01)

(21) Application number: **07101312.2**

(22) Date of filing: **29.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Tendris Holding BV**
**1411 KC  Naarden (NL)**

(72) Inventors:
• **Neeb, Taco Wijnand**
  **1394 PE  Nederhorst Den Berg (NL)**
• **Van Der Hilst, Ramon Philippe**
  **1187 AN Amstelveen (NL)**

(74) Representative: **Rasser, Jacobus Cornelis et al**
**Howrey LLP**
**P.O. Box 94361**
**1090 GJ Amsterdam (NL)**

(54) **Apparatus comprising low voltage power source**

(57)    An apparatus is disclosed for powering an electric load with a low-voltage power supply. The apparatus permits the use of low-voltage power cells that are connected predominantly in parallel. The parallel arrangement of the power cells offers significant practical advantages.

In a preferred embodiment the low voltage power cells are photovoltaic cells.

Figuur 1

## Description

BACKGROUND OF THE INVENTION

1. Field of the Invention

The present intention relates to an apparatus for powering an electric load with a low voltage power source. More specifically, the present intention relates to powering an electric load with a power source that generates a voltage that is much lower than the voltage required by electric load. The apparatus increases the voltage to the work point of the electric load, without significant losses in electrical energy.

2. Description of the Related Art

Due to the high cost of fossil fuel and the concern about global warming caused by the production of carbon dioxide in the combustion of fossil fuels, there is a growing interest in power sources that operate on renewable energy. Examples include photovoltaic cells, thermovoltaic cells, hydrogen fuel cells, biofuels cells, and the like.

Many of these power sources produce electrical power at a low voltage, often on the order of one Volt or less. Photovoltaic cells for example provide a voltage of 0.35 to 0.65 V, typically about 0.45 V. For most applications, the electrical power needs to be provided at a much higher voltage, for example 12 V direct current, or 110 or 230 volts AC. One reason is that, for a certain amount of electrical energy, the current is inversely related to the voltage, making it impractical to transport low voltage electrical energy over long distances. The high current requires very thick cables, and is associated with a high risk of overheating and fire.

It is therefore customary to provide an assembly in which a significant number of low voltage power sources are connected in series, so as to provide a suitably higher voltage at the terminals of the assembly. For a plurality of low voltage power sources connected in series, the performance of the assembly is governed by the weakest link in the chain. Such an assembly will only optimally perform if all of the individual units provide identical performance. In practice, this is never the case. For example, the performance of enzymes in a biofuel cell differs from cells to cell. Photovoltaic cells in an assembly may differ in electric output. A manufacturing tolerance of 5% is common, which means that even cells receiving identical amounts of solar radiation may have different outputs of electric energy. In addition, cells within an assembly may receive different amounts of solar radiation, for example as result of a shadow or debris covering some of the cells. Such events may reduce the output of an assembly of photovoltaic cells connected in series by 30 to 70%. To some extent this loss may be reduced by incorporating bypass diodes, so that poorly performing cells may be bypassed.

For this reason, there are always weaker cells in an assembly of cells connected in series. These weaker cells drag down the performance of the assembly, because they act as loads on the system rather than as contributors to its performance.

It is an object of the present intention to raise the voltage of a low voltage power source to the required voltage of an electric load without the disadvantages of existing systems.

SUMMARY OF THE INVENTION

The present intention relates to an apparatus for powering an electric load with a low voltage power source, said apparatus comprising:

a) a low-voltage power source providing an output voltage Vp;

b) a first accumulator of electric energy, connected in series with the low-voltage power source and operating at a first voltage V1;

c) a second accumulator of electric energy, connected in parallel to the first accumulator, and operating at a second voltage V2;

wherein $V1 + Vp = V2$.

Examples of the low voltage power source include photovoltaic cells, thermovoltaic cells, hydrogen fuel cells and biofuel cells.

Examples of accumulators of electric energy for use in the apparatus of the present intention include flywheels, capacitors, and chemical batteries.

BRIEF DESCRIPTION OF THE DRAWINGS

Figure 1 presents a diagrammatic representation of a first embodiment of the apparatus of the present invention.

Figure 2 presents a diagrammatic representation of a second embodiment of the apparatus of the present invention.

Figure 3 presents a diagrammatic representation of a third embodiment of the apparatus of the present invention.

Figure 4 presents a diagrammatic representation of a fourth embodiment of the present invention, combining features of the second and third embodiments.

Figure 5 presents a diagrammatic representation of a fifth embodiment of the apparatus of the present invention.

DESCRIPTION OF ILLUSTRATIVE EMBODIMENTS

The present intention relates to an apparatus for powering an electric load with a low-voltage power source, said apparatus comprising:

a) a low-voltage power source providing an output voltage Vp;

b) a first accumulator of electric energy, connected in series with the low-voltage power source and operating at a first voltage V1;

c) a second accumulator of electric energy, connected in parallel to the first accumulator, and operating at a second voltage V2;

wherein V1 + Vp = V2.

The low voltage power source for use in the apparatus of the present intention may be any power source producing a voltage Vp that is lower than the voltage required to power the electric load. The low voltage power source may be powered by a fossil fuel, or by a non-fossil fuel, preferably by a renewable energy source. Preferred examples include photovoltaic cells, thermovoltaic cells, hydrogen fuel cells, and biofuel cells.

The invention will be further illustrated for embodiments of the apparatus in which the low voltage power source comprises at least one photovoltaic cell. It will be understood that the principles illustrated by these embodiments can be applied to any other low voltage power source.

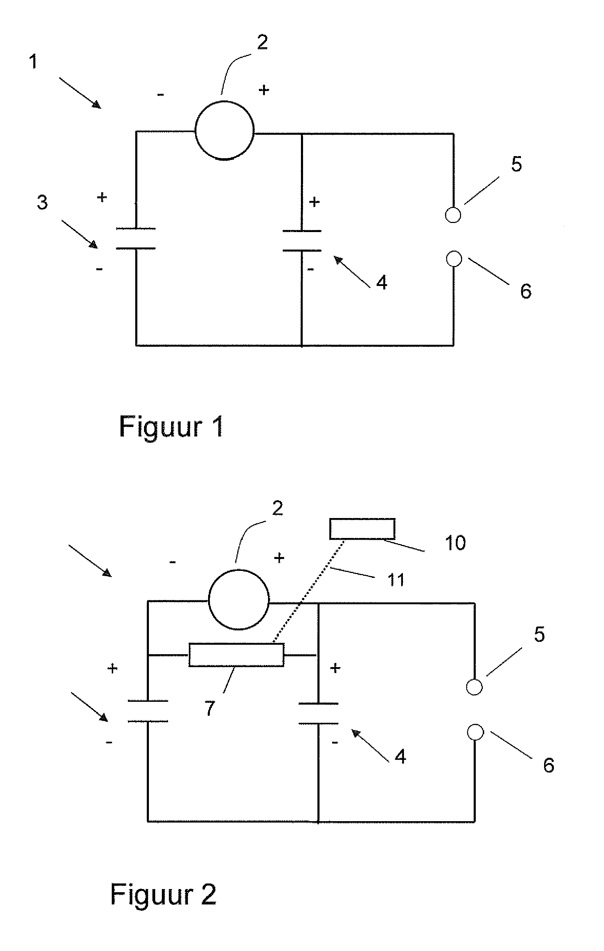

Shown in figure 1 is a first embodiment of an apparatus **1,** comprising a photovoltaic power source **2.** The photovoltaic power source **2** may consist of a single photovoltaic cell, or of a plurality of photovoltaic cells. In the case that photovoltaic power source **2** consists of a plurality of photovoltaic cells, the individual cells may be connected in series, or in parallel, or may consist of a number m of subassemblies of photovoltaic cells, each subassembly containing n photovoltaic cells connected in series. In practice, n is an integer ranging from 1 to 20, preferably from 1 to 10 and more preferably from 1 to 5. The value of the integer m is determined by the selection of the value of n, and the number of photovoltaic cells that the assembly is able to accommodate. The total number of photovoltaic cells is n x m.

Photovoltaic power source **2** is connected in series with a first accumulator of electric energy **3.** The second accumulator of electric energy **4** is connected parallel to the first accumulator of electric energy **3.** Preferably, the first accumulator **3** and the second accumulator **4** are of equal design, but it will be understood that the apparatus will function properly if the two accumulators are of different design.

The first accumulator **3** provides a first voltage V1. The photovoltaic power source **2** provides an output voltage Vp. The voltage over the second accumulator **4** is given by the equation:

$$V2 = V1 + Vp \quad (1)$$

It will be understood that in practice the value of V2 may be slightly lower than the value provided by equation (1), due to losses in the circuit, in particular when further components are added to the circuit as exemplified in embodiments discussed herein below.

Terminals **5** and **6** are provided for connecting an external electric load, which is to be powered by apparatus **1.** When no external load is connected to terminals **5** and **6,** electric power generated by photovoltaic power source **2** is used to charge the second accumulator **4.** When a load is connected to terminals **5** and **6** that draws less power than is generated by power source **2,** any excess power is used to charge accumulator **4.** When the external load connected to terminals **5** and **6** consumes more power than is being generated by power source **2,** additional power is provided to the load by accumulator **4.**

The accumulators to **3** and **4** may be any type of device capable of storing electrical energy. Examples include traditional forms, such as batteries and capacitors, and non-traditional forms such as flywheels provided with electrical generators.

The term "battery" as used herein means a device capable of converting electrical energy into chemical energy, and of converting chemical energy to electrical energy. This type of battery is also referred to as secondary battery or rechargeable battery. Examples include lead-acid batteries, for example wet batteries, gel batteries and absorbent glass mat batteries; lithium ion batteries; lithium ion polymer batteries; NaS batteries; nickel-iron batteries; nickel-metal hydride batteries; nickel-cadmium batteries; nickel-zinc batteries; and molten salt batteries.

Examples of capacitors that may be used as accumulators of electric energy include conventional capacitors (metal film capacitors; mica capacitors; paper capacitors; glass capacitors; and ceramic capacitors); electrolytic capacitors; and in particular the so-called super capacitors.

Super capacitors, sometimes also referred to as ultra capacitors, may be made from carbon aerogel, carbon nano-tubes, or highly porous electrode materials. They are known for their extremely high capacity, and are being evaluated as alternatives to rechargeable batteries. Particularly preferred are ceramic ultra capacitors with a barium-titanate dielectric, which have a high specific energy.

Figure 2 depicts a diagrammatic representation of a second embodiment of the apparatus of the present invention. This embodiment differs from the embodiment of figure 1 by the presence of controller **7.** The role of controller **7** is to monitor the output of power source **2,** and to optimize its performance. Controller **7** may monitor the performance of power source **2** directly, for example by monitoring the voltage supplied by power source **2** in function of the current in the system. Controller **7** may also monitor external parameters that influence the performance of power source **2.** This is illustrated by light detection element **10,** which is placed in close proximity of photovoltaic power source **2.** Light detection element **10** is connected to controller **7** via connection **11.** Connection **11** may be a wire connection, or the communication from detection element **10** to controller **7** may be wireless, such as by an infrared or radio frequency signal. For such indirect monitoring, controller **7** may be provided with a memory device containing data correlating the performance of power source **2** with the value of the parameter measured by detection element **10**. For example, controller **7** may use historic data to calculate the power output of power source **2** in function of the light intensity detected by detection element **10**.

In a preferred embodiment controller **7** is capable of monitoring and controlling the respective charge conditions of accumulators **3** and **4**. For example, if accumulator **4** is fully charged, and power source **2** produces more power than is required by a load connected to terminals **5** and **6**, controller **7** will divert electric energy to charge accumulator **3**.

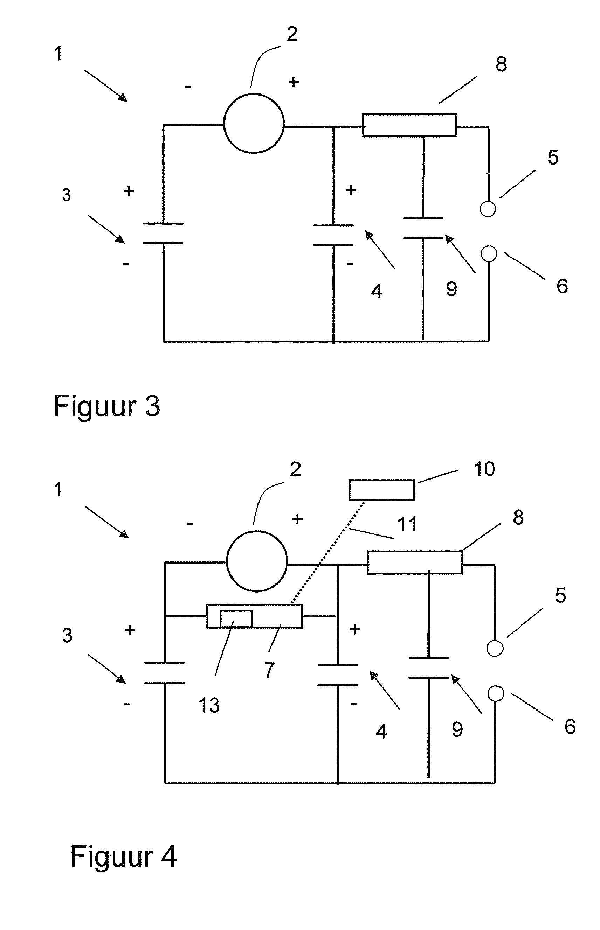

Figure 3 represents a diagram of a third embodiment of the apparatus of the present invention. In this embodiment a third accumulator of electric energy **9** is included in the apparatus. The nature and design of accumulator **9** may be the same or different from the nature and design of accumulators **3** and **4**. For example, accumulators **3** and **4** may be rechargeable batteries, whereas accumulator **9** may be a capacitor. Controller **8** monitors the power production by power source **2,** and compares it to the demand of any load connected to terminals **5** and **6**. When power source **2** produces more electric energy than is required by the load, controller **8** diverts excess electric energy to accumulator **9**.

When the demand of a load connected to terminals **5** and **6** exceeds the power production of power source **2,** controller **8** may draw power from accumulator **9**. This embodiment is particularly suitable for supplying power to a load having rapidly fluctuating power needs. Rapid changes in power needs can be accommodated by accumulator **9,** in particular if actuator **9** is a capacitor. Accumulators **3** and **4,** which may be chemical batteries, are more suitable for responding to fluctuations in power needs that are longer lasting.

The embodiment of figure 4 combines the features of figures 2 and 3. In addition, controller **7** is equipped with a startup circuit **13**. Startup circuit **13** is designed to create and maintain a predetermined minimum charge in accumulators **3** and **4**. Specifically, if for some reason the charge values of accumulators **3** and **4** drop below a predetermined minimum value, startup circuit **13** will use power from power source **2** to restore these charges to the required minimum values before power is provided to terminals **5** and **6**.

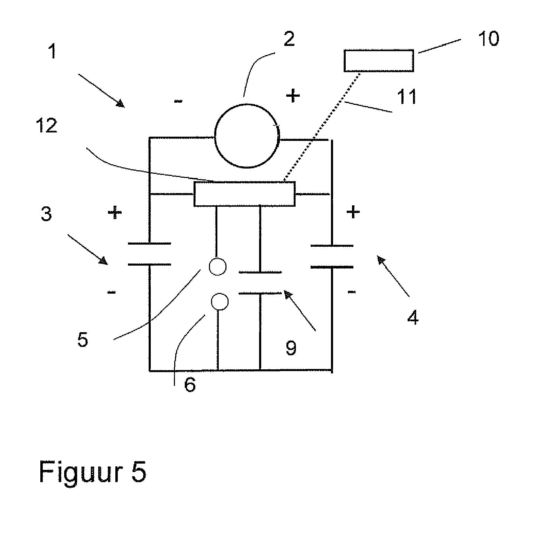

The embodiment of figure 5 is similar to the embodiment of figure 4. The controllers **7** and **8** of figure 4 have been integrated into controller **12** which monitors the operation of power source **2,** the charge position of accumulators **3** and **4,** the diversion of power to accumulator **9,** and the voltage supplied to terminals **5** and **6**. Depicted also is external detection element **10,** which provides input to controller **12** via connection **11**. Connection **11** may be a wire, or it may be wireless connection, such as an infrared or radio signal.

It will be clear from the foregoing that the apparatus of the present invention is capable of providing a voltage to and electric load that is much higher than the voltage generated by the low voltage power source. For this reason, it is not necessary for the low voltage power source to be connected to other such power sources in series. In a preferred embodiment, the apparatus comprises a plurality of photovoltaic cells grouped in a matrix of parallel connected units. Photovoltaic cells may conveniently be connected in parallel by mounting the cells on a unitary sheet of conducting material. Preferably the unitary sheet of conducting material is made of a metal. Preferred metals are those that have a high conductivity for both electricity and heat, and are suitably corrosion resistant. Examples of suitable metals include copper, nickel, aluminum, gold, and alloys thereof. Although gold is preferred in terms of conductivity and corrosion resistance, its price is prohibitive for many applications. Therefore in many cases copper is the preferred metal for use in the unitary sheet.

Mounting photovoltaic cells conductively onto a unitary metal sheet offers a number of advantages. First of all, it obviates the need for wire connections between the corresponding electrodes of the individual photovoltaic cells, which reduces the complexity and cost of the manufacture of a photovoltaic cell assembly. In addition, because the cells are connected in parallel, there is no need for bypass diodes as are often included in photovoltaic cell grids that have the cells connected in series. Yet another advantage is improved dissipation of heat through the unitary sheet of conducting material. In use, photovoltaic cells generate heat as a byproduct. This is undesirable, because the effectiveness of photovoltaic cells goes down as the temperature of the cells goes up. Having the cells mounted on a metal sheet makes it possible to provide cooling by thermally connecting the conducting material to a cooling medium. This may conveniently be accomplished by providing a cooling coil to the surface of the sheet opposite to the surface to which the photovoltaic cells are mounted. The cooling coil may be connected to a heat pump, so that the temperature of the photovoltaic cells may be kept at or near its optimum. The heat energy may be recovered from the cooling medium and may be used for heating purposes, for example for heating a water supply.

As mentioned hereinabove, it is advantageous to maximize the number of photovoltaic cells that are connected in parallel, and minimize same the number of photovoltaic cells that are connected in series. This reduces the need for bypass diodes. Accordingly, the low voltage power source preferably contains fewer than two bypass diodes for every 10 photovoltaic cells present in the low voltage power source, and preferably the low voltage power source is free of bypass diodes.

Another advantage of connecting the photovoltaic cells in parallel is that a small number of photovoltaic cells, each having a large surface area, may be used. In a preferred embodiment, the apparatus comprises a low voltage power source which comprises at least one photovoltaic cell having the surface area of more than 400 square cm, preferably more than 600 square cm, still more preferably more than 1,000 square cm.

As mentioned earlier, it is not necessary for the low-voltage power source to provide an output voltage Vp sufficient to power the external electric load. It is therefore possible to provide a low voltage power source having an output voltage of less than 20 volts, preferably less than 10 volts, and more preferably less than 5 volts. Likewise, the external voltage Ve provided to be electric load is such that Ve is at least two times Vp, preferably at least ten times Vp, and more preferably at least 100 times Vp.

Hot fuel cells expand when in use, which causes problems when the cells are connected in series. Exotic materials have been proposed to limit this thermal expansion, so that fuel cells may be placed closely together. The present invention allows fuel cells to be connected in parallel, so that they do not need to be placed closely together, and thermal expansion does not cause problems.

It will be clear that the external load can be any load, or a combination of electric loads. For example, it may be a single light source, such as a light emitting diode, or it may be the combination of electric loads as may be present in a home or a building. A particularly attractive use of the apparatus of the present invention is connecting it to a power grid. This requires that the apparatus be connected to a converter for converting electric energy generated by the apparatus to an alternating current at a voltage compatible with that of the grid. This arrangement makes it possible to sell power to the grid when the apparatus produces more power than is needed for internal use, and to supplement the power with power from the grid at times that the demand is greater than the amount of power produced by the apparatus.

Thus, the invention has been described by reference to certain embodiments discussed above. It will be recognized that these embodiments are susceptible to various modifications and alternative forms well known to those of skill in the art.

**Claims**

1. Apparatus for powering an electric load with a low-voltage power source, said apparatus comprising:

   a) a low-voltage power source providing an output voltage Vp;
   b) a first accumulator of electric energy, connected in series with the low-voltage power source and operating at a first voltage V1;
   c) a second accumulator of electric energy, connected in parallel to the first accumulator, and operating at a second voltage V2;

   wherein V1 + Vp = V2.

2. The apparatus of Claim 1 further comprising a first controller for optimizing the operation of the low-voltage power source.

3. The apparatus of claim 1 or 2 further comprising a third accumulator of electric energy, and a second controller for diverting electric energy to said third accumulator in response to an imbalance in availability of and demand for electric energy.

4. The apparatus of claim 2 or 3 wherein the second controller is integrated with the first controller.

5. The apparatus of any one of the preceding claims wherein the first accumulator and the second accumulator are chemical batteries.

6. The apparatus of claim 5 wherein the first accumulator and the second accumulator are lead sulfate batteries.

7. The apparatus of any one of claims 1 through 4 wherein the first accumulator and the second accumulator are capacitors or fly wheels.

8. The apparatus of claim 7 wherein the first accumulator and the second accumulator are super capacitors.

9. The apparatus of any one of the preceding claims wherein the low voltage power source comprises a photovoltaic cell, a thermovoltaic cell, or a fuel cell.

10. The apparatus of claim 9 wherein the low voltage power source comprises a photovoltaic cell.

11. The apparatus of claim 10 wherein the low voltage power source comprises a plurality of photovoltaic cells grouped in a matrix of parallel-connected units.

12. The apparatus of claim 11 wherein said units are connected in parallel to each other as a result of being conductively mounted on a unitary sheet of conducting material.

13. The apparatus of claim 12 wherein the unitary sheet of conducting material is made of a metal.

14. The apparatus of claim 13 wherein the metal is selected from copper, nickel, aluminum, gold, and alloys thereof.

15. The apparatus of claim 14 wherein the metal is copper.

16. The apparatus of any one of claims 12 through 15 wherein the sheet of conducting material is thermally connected to a cooling medium.

17. The apparatus of claim 16 wherein, when the apparatus is in use, the cooling medium absorbs heat generated in the photovoltaic cells, and transports the heat away from the photovoltaic cells.

18. The apparatus of claim 17 wherein the heat is recovered from the cooling medium and used for heating purposes.

19. The apparatus of claim 18 wherein the recovered heat is used for heating a water supply.

20. The apparatus of any one of claims 11 through 19 wherein the low voltage power source contains fewer than - bypass diodes for every 10 photovoltaic cells.

21. The apparatus of claim 20 wherein the low voltage power source is free of bypass diodes.

22. The apparatus of any one of claims 10 through 21 wherein the low voltage power source comprises at least one photovoltaic cell having a surface area of more than 400 cm$^2$.

23. The apparatus of any one of the preceding claims wherein Vp is less than 20 Volts.

24. The apparatus of claim 23 wherein Vp is less than 10 Volts.

25. The apparatus of claim 24 wherein Vp is less than 5 Volts.

26. The apparatus of any one of the preceding claims providing an external voltage to the load of Ve, wherein Ve is at least 2 x Vp.

27. The apparatus of claim 26 wherein Ve is at least 10 x Vp.

28. The apparatus of claim 27 wherein Ve is at least 100 x Vp.

29. The apparatus of any one of the preceding claims further comprising a converter for converting electric energy generated by the apparatus to an alternating current.

30. The apparatus of claim 29 which is connected to a power grid.

Figuur 1

Figuur 2

Figuur 3

Figuur 4

Figuur 5

## EUROPEAN SEARCH REPORT

**European Patent Office**

| Application Number |
|---|
| EP 07 10 1312 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 134 057 A (PORTMANN HUBERT) 9 January 1979 (1979-01-09) | 1,2, 5-10, 23-30 | INV. H02M3/07 H02J7/35 H01L31/042 |
| Y | * column 2, line 52 - column 4, line 21 * <br><br> * column 4, line 50 - line 54; figures 2,3,5 * | 3,4, 11-22 | |
| Y | JP 01 298920 A (CITIZEN WATCH CO LTD) 1 December 1989 (1989-12-01) * abstract; figure 1 * | 3,4 | |
| X | JP 05 227678 A (NISSIN ELECTRIC CO LTD) 3 September 1993 (1993-09-03) <br><br> * abstract; figure 1 * | 1,2, 5-10, 23-30 | |
| Y | WO 2006/041296 A (TENDRIS SOLUTIONS B V [NL]; NEEB TACO WIJNAND [NL]; VAN DER HILST RAMO) 20 April 2006 (2006-04-20) * the whole document * | 1,2, 5-10, 23-30 | |
| Y | DE 28 31 227 A1 (VARTA BATTERIE) 24 January 1980 (1980-01-24) <br><br> * page 3, paragraph 4; figure 1 * | 1,2, 5-10, 23-30 | **TECHNICAL FIELDS SEARCHED (IPC)** <br> H02M <br> H02J <br> H01L |
| A | US 2003/182023 A1 (PEREZ RICHARD [US]) 25 September 2003 (2003-09-25) * paragraph [0005] * | 29,30 | |
| Y | US 4 582 588 A (JENSEN MILLARD J [US] ET AL) 15 April 1986 (1986-04-15) * column 2, line 14 - column 3, line 40; figures * | 11-22 | |
| | -/-- | | |

The present search report has been drawn up for all claims

| Place of search | Date of completion of the search | Examiner |
|---|---|---|
| The Hague | 28 December 2007 | Zanichelli, Franco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 07 10 1312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 31 09 284 A1 (INTERATOM [DE]) 30 September 1982 (1982-09-30) * page 8, line 25 - line 35; figure 2 * ----- | 16-19 | |
| A | US 2 904 613 A (ELLIOTT PARADISE MAURICE) 15 September 1959 (1959-09-15) * column 4, line 24 - line 53; figures * ----- | 11-15, 20-22 | |
| A | EP 1 717 867 A (NAKATA JOSUKE [JP]) 2 November 2006 (2006-11-02) * paragraph [0005] * ----- | 11 | |

TECHNICAL FIELDS SEARCHED (IPC)

The present search report has been drawn up for all claims

| Place of search | Date of completion of the search | Examiner |
|---|---|---|
| The Hague | 28 December 2007 | Zanichelli, Franco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

European Patent
Office

Application Number

EP 07 10 1312

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**European Patent Office**

**LACK OF UNITY OF INVENTION SHEET B**

Application Number

EP 07 10 1312

The Search Division considers that the present European patent application does not comply with the requirements of unity of invention and relates to several inventions or groups of inventions, namely:

1. claims: 1-10, 23-30

   Apparatus for powering an electrical load comprising:
   a low-voltage power source connected in series with a first accumulator of electric energy;
   a second accumulator of electric energy  connected in parallel to the series of the low-voltage source and the first accumulator.

1.1. claims: 1-4

   Third accumulator for diverting electric energy in response to an imbalance of the load

1.2. claims: 5-8

   Type of accumulators.

1.3. claims: 9,10

   Type of voltage source.

1.4. claims: 23-28

   Parameters of the circuit.

1.5. claims: 29,30

   type of load
   ---

2. claims: 11-22

   Apparatus for powering an electrical load comprising:
   a low-voltage power source connected in series with a first accumulator of electric energy;
   a second accumulator of electric energy  connected in parallel to the series of the low-voltage source and the first accumulator.
   Details of the photovoltaic cell panel constituting the low-voltage source.
   ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 07 10 1312

This annex lists the patent family members relating to the patent documents cited in the above-mentioned European search report.
The members are as contained in the European Patent Office EDP file on
The European Patent Office is in no way liable for these particulars which are merely given for the purpose of information.

28-12-2007

| Patent document cited in search report | | Publication date | Patent family member(s) | | Publication date |
|---|---|---|---|---|---|
| US 4134057 | A | 09-01-1979 | CH<br>DE<br>FR<br>GB<br>JP | 617822 A<br>2654311 A1<br>2335081 A1<br>1571892 A<br>52071645 A | 30-06-1980<br>21-07-1977<br>08-07-1977<br>23-07-1980<br>15-06-1977 |
| JP 1298920 | A | 01-12-1989 | JP | 2688212 B2 | 08-12-1997 |
| JP 5227678 | A | 03-09-1993 | NONE | | |
| WO 2006041296 | A | 20-04-2006 | AU<br>EP<br>NL | 2005294948 A1<br>1803203 A2<br>1027247 C2 | 20-04-2006<br>04-07-2007<br>19-04-2006 |
| DE 2831227 | A1 | 24-01-1980 | NONE | | |
| US 2003182023 | A1 | 25-09-2003 | NONE | | |
| US 4582588 | A | 15-04-1986 | NONE | | |
| DE 3109284 | A1 | 30-09-1982 | ES<br>GR<br>IT | 8303822 A1<br>81543 A1<br>1190713 B | 01-05-1983<br>11-12-1984<br>24-02-1988 |
| US 2904613 | A | 15-09-1959 | NONE | | |
| EP 1717867 | A | 02-11-2006 | NONE | | |

EPO FORM P0459

For more details about this annex : see Official Journal of the European Patent Office, No. 12/82